# EUROPÄISCHE PATENTSCHRIFT

(11) **EP 0 328 019 B1**
(45) Veröffentlichungstag und Bekanntmachung des Hinweises auf die Patenterteilung: **31.08.1994**
(21) Anmeldenummer: 89102007.5
(22) Anmeldetag: 06.02.1989
(51) Int. Cl.: A23G 1/02, A23G 1/00, A23G 1/04

(54) **Verfahren zur Reinigung von Kakao-Nahrungsfaser-reichem Material**
Purifying process for a product rich in cacao nutrition fibres
Procédé de purification de denrée riche en fibre nutritives de cacao

(30) Priorität: 10.02.1988 DE 3804007
(43) Veröffentlichungstag der Anmeldung: 16.08.1989
(73) Patentinhaber: Kraft Jacobs Suchard SA, CH-8008 Zürich (CH)
(72) Erfinder: Schwitzguebel, Thierry, CH-2525 Le Landeron (CH); Zumbé, Albert, Dr., CH-2003 Neuchâtel (CH)
(74) Vertreter: Bolte, Erich, Dipl.-Ing.

(56) Entgegenhaltungen:
- CA-A- 1 209 842
- CH-A- 622 028
- DE-A- 1 692 379
- US-A- 1 650 356
- US-A- 3 397 061
- US-A- 3 615 659
- US-A- 3 821 420
- US-A- 3 982 042

## Beschreibung

Die Erfindung betrifft ein Verfahren zur Herstellung von diätischen Kakao-Nahrungsfasern aus Kakaopulver zur Verwendung als Ballaststoff in einem Schokolade-Produkt und ein Nahrungsfaser-reiches Schokolade-Produkt.

Seit kurzem wird auf die diätetische Bedeutung von Nahrungsfasern große Aufmerksamtkeit gerichtet. Nahrungsfasern werden allgemein als die Summe der unverdaulichen Kohlenhydrate und Kohlenhydratkomponenten der Nahrung einschließlich Cellulose, Lignin, Hemicellulosen, Pentosanen, Gummi und Pektinen definiert. Die Menge in einem bestimmten Nahrungsmittel variiert in Abhängigkeit von dem analytischen Verfahren der Untersuchungen. Sie kann resistente Stärken, Polyphenole und Tannine einschließen. Für Analysen im Zusammenhang mit dem Gegenstand der Erfindung wurde die AOAC-Methode angewandt. Nahrungsfasern haben einen sehr niedrigen Kaloriengehalt (ca. 1 kcal/g). Dies hängt davon ab, ob sie teilweise im Dickdarm fermentiert werden.

Kakao-Nahrungsfasern sind vorwiegend unlösliche Nahrungsfasern. Es ist bekannt, daß eine Diät, die reich an unlöslichen Nahrungsfasern ist, eine Anzahl positiver physiologischer Wirkungen zeigt, insbesondere wird eine Erhöhung der intestinalen Transitzeit und der Stuhldichte erreicht. Nahrungsfasern sind zudem raumfüllend, das bedeutet, sie geben, wenn sie gegessen wurden, ein Gefühl der Fülle oder Sättigung ohne zusätzlich Kalorien.

Nahrungsmittel wie z. B. Früchte und Gemüse sind die natürlichen Quellen für Nahrungsfasern. Der Verzehr von Nahrungsfasern ist seit der Jahrhundertwende in den entwickelten Ländern stark zurückgegangen. Es wird behauptet, daß das Auftreten einer Zahl von Krankheiten, insbesondere das Auftreten von Divertikeln, Kreislauferkrankungen, Dickdarmkrebs und Diabetes in umgekehrtem Verhältnis zum Nahrungsfaser-Verzehr stehen. Für die breite Bevölkerung wird eine angemessene Steigerung des Nahrungsfaser-Verzehrs empfohlen.

Schokoladenkonfekt stellt eine dürftige Quelle für Nahrungsfasern dar; und eine Anreicherung mit Fasern wird besonders von Ernährungswissenschaftlern und Medizinern in Betracht gezogen. Hier bestehen allerdings technologische Grenzen, da Geschmack, Aussehen und Konsistenz eines bestimmten Lebensmittels durch die Einbringung von gereinigten Nahrungsfasern häufig negativ beeinflußt werden.

Wir haben jedoch festgestellt, daß gereinigte Kakao-Nahrungsfasern ein geeignetes Ingrediens darstellen, um Schokoladenkonfekt anzureichern. Gereinigte Kakao-Nahrungsfasern können in bedeutenden Mengen in diese Produkte eingearbeitet werden. Die Verwendung von gereinigten Kakao-Nahrungsfasern wird demnach auch den Kaloriengehalt des Produktes verringern.

Die Bemühungen, Nahrungsfasern in Schokolade einzubringen, stoßen in vielen Ländern an vom Gesetzgeber gesteckte Grenzen. In der Bundesrepublik Deutschland ist die Zusammensetzung von Schokolade in der sogenannten Kakaoverordnung festgelegt. Darin sind die zugelassenen Ingredenzien und Zusatzstoffe streng limitiert. Auch die Beimengung von "kakaoeigenen" Faserstoffen, die aus der Kakaoschale stammen, ist nicht zugelassen.

Die Gewinnung von Nahrungsfasern aus Kakaoschalen ist beispielsweise aus EP 68 229 bekannt. Danach werden die Schalen der Kakaobohnen einer Naßreinigung unterworfen, getrocknet und gemahlen. Das feingemahlene Endprodukt soll Nahrungs- und Genußmitteln zur Verbesserung der verdauungsfördernden Eigenschaften zugesetzt werden.

Gegen die Verwendung von Kakaoschalen zur Erhöhung des Nahrungsfaser-Gehaltes von Lebensmitteln sprechen die Erfahrungen mit Kakaoschalen als Tierfutter (es traten Erkrankungen bei den Tieren auf) sowie die gesetzlichen Bestimmungen in vielen Ländern.

Die Verarbeitung von Kakao mit Cerealien als Nahrungsfaser-Träger zu konfektartigen Süßigkeiten ist bekannt. So ist z. B. in CH-PS 646 842 ein Produkt auf Kakaobasis beschrieben, das hauptsächlich aus Kleie (als Quelle für Nahrungsfasern) und Kakaopulver hergestellt wird. Derartige Produkte können aufgrund ihrer organoleptischen Eigenschaften und eventuell aufgrund bestehender gesetzlicher Bestimmungen nicht als reine Schokolade im eigentlichen Sinne gelten.

Die US-PS 3 615 659 beschreibt ein Verfahren zur Herstellung eines Getränks mit Schokoladenaroma. Hierzu wird ein fettfreier Kakaoextrakt hergestellt. Dazu wird eine Mischung aus Kakaopulver und Wasser hergestellt unddiese wird auf eine Temperatur zwischen 60° C und 80° C eingestellt. Die Kakaostärke wird mit Hilfe eines Enzyms gelöst und die ungelösten Bestandteile werden von der Mischung z.B. durch Filtration abgetrennt. Die so gewonnene Lösung, das Filtrat, wird gekühlt und das darin enthaltene Fett wird von der Lösung abgetrennt. Der so gewonnene fettfreie Kakaoextrakt wird zur Herstellung von Getränken verwendet. Der bei der Filtration entstehende Rückstand, der Feststoffe und Nahrungsfasern enthält, wird verworfen.

Handelsübliche Schokolade weist aufgrund ihrer Rezeptur äußerst geringe Mengen an Kakao-Nahrungsfasern in der Größenordnung von 1 - 2 Gew.-% auf, die aus der Kakaomasse stammen. Durch Erhöhung des Gehaltes an diesen kakaoeigenen Nahrungsfasern wäre die Herstellung einer Nahrungsfaser-reicheren Schokolade, die auch gesetzlichen Vorschriften entsprechen könnte, denkbar. Die Anreicherung der genannten Nahrungsfasern ist allerdings ein bisher ungelöstes Problem.

Aufgabe der vorliegenden Erfindung ist es nun, ein Verfahren zur Herstellung von diätischen Kakao-Nahrungsfasern bereitzustellen, wobei diese für die Herstellung eines Nahrungsfaser-reichen Schokolade-Produkts, z. B. Konfekt und Schokoladengetränken, geeignet sind.

Diese Aufgabe wird in überraschend einfacher Weise durch die kennzeichnenden Merkmale des Patentanspruchs 1 gelöst. Danach dient Kakaopulver mit geringem Fettgehalt als Ausgangsmaterial zur Gewinnung von Nahrungsfaser-reichem Material. Das Kakaopulver wird einer enzymatischen Behandlung zum Abbau der enthaltenen Stärke unterworfen. Die entstehenden Stärke-Abbauprodukte werden entfernt und ein das Nahrungsfaser-reiche Kakaomaterial enthaltender Rückstand wird zur Reinigung Wasch-, Separations- und Trocknungsschritten unterworfen. Die enzymatische Behandlung wird vorzugsweise mit α-Amylase durchgeführt. Gemäß einem Merkmal des Patentanspruchs 3 ist es besonders vorteilhaft, das Kakaopulver vor der enzymatischen Behandlung in einem Lösungsmittel zu suspendieren. Das Lösungsmittel wird vorteilhafterweise so gewählt, daß die Stärkeabbauprodukte darin löslich sind und in gelöster Form von dem unlöslichen Nahrungsfaser-reichen Material leicht abgetrennt werden können. Als besonders geeignete Lösungsmittel erwiesen sich Wasser und Ethanol. Sie können jeweils allein oder im Gemisch verwendet werden. Bei Bildung der Suspension gehen im Kakaopulver in geringen Mengen enthaltene lösliche Komponenten in das Lösungsmittel über. Zusätzlich gehen lösliche Substanzen, die während der Stärke-Hydrolyse gebildet werden ebenfalls in die Lösungsmittelphase über. Die enzymatische Hydrolyse unter Verwendung von α-Amylase ist auf die im Kakaopulver enthaltene Stärke gerichtet. Stärke wird in glucosidische Saccharidbausteine gespalten, die in Wasser und Wasser/Alkoholgemischen löslich sind. Der Fettgehalt des verwendeten Kakaopulvers ist für den erfolgreichen Ablauf des Verfahrens kritisch. Er sollte vorzugsweise 20 Gew.-% nicht überschreiten.

Prinzipiell ist das erfindungsgemäße Verfahren auch auf Preßkuchen anwendbar. Preßkuchen wird entsprechend der traditionellen Kakao-Technologie hergestellt. Beispielsweise werden Kakaobohnen gereinigt, zur Entfernung der Schalen geschält, geröstet und gebrochen (dieses Material wird als ,"Kakao-Nibs" bezeichnet), anschließend zu einer Partikelgröße in der Größenordnung von 50 Mikron im Durchmesser gemahlen (dieses Material wird als Kakao-Liquor bezeichnet) und schließlich wird Kakaobutter teilweise extrahiert. Preßkuchen weist einen Mindestgehalt an Kakaobutter von 8 % Fett auf. Ein hoher Fettgehalt des Kakaoliguors kann eine nachteilige Wirkung auf die enzymatische Hydrolyse haben. Ein wesentlicher Vorteil bei der Verwendung von Kakaopulver im Vergleich zu Preßkuchen ist in der wesentlich kleineren Teilchengröße des Kakaopulvers zu sehen. Der Angriff der α-Amylase sind bei kleineren Teilchen des Kakaopulvers erleichtert. Diese Tatsache ist wohl auch der Hauptgrund dafür, daß besonders günstige Ergebnisse bei Anwendung des Verfahrens auf Kakaopulver erzielt wurden.

Üblicherweise wird handelsübliches Kakaopulver mit einem Fettgehalt von 10 bis 20 % benutzt. Vorteilhafter ist jedoch ein Kakaopulver mit einem Fettgehalt von weniger als 10 %.

Zur Durchführung des beanspruchten Verfahrens wird vorzugsweise eine Suspension von 10 bis 30 Gew.-% Kakaopulver in Wasser und/oder einem Ethanol-Wasser-Gemisch hergestellt. Der pH-Wert dieser Suspension ist je nach Art des Kakaopulvers (alkalisiertes oder nicht-alkalisiertes) verschieden und wird mit Säuren oder Basen auf einen Wert zwischen 5,5 und 8,0 eingestellt. Die zu pH-Wert-Einstellung verwendeten Säuren oder Basen müssen hinsichtlich ihrer Art und Freiheit für Lebensmittel geeignet sein. Bevorzugt verwendet werden z. B. Kaliumhydroxid, Natriumhydroxid, Kalziumhydroxid, Phosphorsäure, Zitronensäure.

Die hitzeresistente α-Amylase wird in handelsüblicher Qualitat zusammen mit einem Enzym-Stabilisator zu der Suspension von Kakaopulver mit einem Lösungsmittel gegeben. Die Suspension wird während der Reaktion (Digestion) bei erhöhter Temperatur (zwischen 20°C und 90°C) gehalten. Die Reaktionszeit liegt zwischen 30 Minuten und 5 Stunden. Die Dauer des Behandlungsverfahrens ist von den jeweiligen Verfahrensvorrichtungen abhängig. Sind vorhandene Vorrichtungen auf größere Mengen und geringere Temperaturen ausgelegt, so ergeben sich längere Behandlungszeiten. Bei höheren Temperaturen kann die Behandlungszeit kürzer gehalten werden.

Die Konzentration von α-Amylase in der Suspension wird in Abhängigkeit von der gewünschten Reaktionszeit ausgewählt. Allgemein gilt, daß bei niedrigerer Konzentration eine längere Hydrolyse-Zeit notwendig ist. Als günstig erwies sich die Verwendung einer α-Amylase-Lösung mit einer Aktivität von 60 Kilo Units (KNU)/g in Konzentrationen von 0,1 bis 1,5 %, bezogen auf das eingesetzte Kakaopulver.

Als 1 KNU bezeichnet man die Menge an Enzym, die 5,26 g Stärke (Merck, Amylum solubile ERG B 6) pro h in folgender Mischung abbaut:

| | |
|---|---|
| Substrat | lösliche Stärke |
| (Ca²⁺) | 0,0043 M |
| Reaktionszeit | 7 bis 20 min. |
| Temperatur | 37°C |
| pH-Wert | 5,6 |

Die nach Ende der Reaktionszeit vorliegende Aufschlämmung wird entweder einer Druck-Filtration unter Verwendung klassischer Druck-Filtrations-Vorrichtungen oder kontinuierlichem Zentrifugieren beispielsweise unter Verwendung einer Horizontal-Zentrifuge unterworfen. Die zurückbleibende Festfraktion wird zur Entfernung anhaftender löslicher Substanzen gewaschen. Wasch-Lösungsmittel werden ausgewählt aus der Gruppe Wasser, Ethanol, Methanol und Aceton.

Der gewaschene feste Rückstand (solid cake) wird getrocknet. Dabei wird vorzugsweise bei vermindertem Druck und bei Temperaturen zwischen 30°C und 110°C gearbeitet. Der getrocknete feste Rückstand schwankt in seiner Zusammensetzung, abhängig von dem als Ausgangsmaterial gewählten Kakaopulver und den Versuchbedingungen wie Digestionszeit, Waschprozessen und Waschflüssigkeiten in den nachfolgend angegebenen Grenzen:

| | |
|---|---|
| Nahrungsfasern | 35 bis 75 Gew.-% |
| denaturiertes Protein | 15 bis 27 Gew.-% |
| Asche | 2,5 bis 9,1 Gew.-% |

Der Rest des "solid cake" ist verdauliches Material gemäß der AOAC-Diät-Faser-Analysen-Methode.

Im folgenden wird die Erfindung anhand von Beispielen näher erläutert:

### Beispiel 1

15 kg Kakaopulver (Fettgehalt: 10 bis 12 Gew.-%) werden in 135 kg Wasser suspendiert. Die Mischung wird kräftig gerührt. Dann erfolgt die zugabe von 90 g Kalziumhydroxid und 150 g einer Hitze resistenten α-Amylase-Lösung. Die Suspension wird auf 90°C derart erhitzt, daß eine Temperaturzunahme von 2°C pro Minute nicht überschritten wird. Die Reaktionstemperatur von 90°C wird eine Stunde aufrechterhalten. Nach dieser Digestionszeit wird die Suspension auf 70°C gekühlt. Feststoffe und Flüssigkeit werden mittels Druckfiltration (3 Bar Unterschied) getrennt. Die feste Fraktion wird in 60 kg Aceton suspendiert, die Separation erfolgt mit der gleichen Vorrichtung wie oben beschrieben.

Der zurückbleibende Feststoff wird nunmehr unter Vakuum bei 40°C getrocknet. Das Endprodukt ist ein Nahrungsfaser-reiches Kakao-Material mit folgender Zusammensetzung:
5,49 kg Nahrungsfasern
2,43 kg nicht-enzymatisch abbaubares Protein
0,81 kg Asche.

Dieses Nahrungsfaser-reiche Kakaomaterial ist geeignet zur Herstellung verschiedener Sorten Nahrungsfaser-reicher Schokoladen (z. B. dunkle Schokolade und besonders für geformte Schokolade und Kuvertüre). Es kann auch für Kakaogetränke, Konfektriegel, Schokoladenaufstrich und Backwaren verwendet werden.

### Beispiel 2

Das Verfahren entspricht dem im Beispiel 1 Beschriebenen, als Ausgangsmaterial wird aber Preßkuchen eingesetzt. Das erhaltene Endprodukt entspricht dem im Beispiel 1 Beschriebenen hinsichtlich seiner Zusammensetzung und findet Anwendung zur Herstellung der gleichen Produkte.

### Beispiel 3

5 kg nicht-alkalisiertes Kakaopulver wird in einer Lösung von 19,75 Ethanol und 5,25 kg Wasser suspendiert. Es wird 31,5 g Kalziumhydroxid zugegeben. Die α-Amylase und der entsprechende Stabilisator werden gemäß den Empfehlungen des Enzymherstellers zugefügt.

Die Temperatur der Aufschlämmung wird auf 45°C erhöht und für 5 Stunden konstant gehalten, wobei kräftig gerührt wird. Anschließend erfolgt eine Separation durch Filtration bei 1 Atmosphäre Filtrations-Druck.

Die feste Fraktion wird dann bei 103°C getrocknet. Das ballaststoffreiche Kakao-Material wird gemahlen und zur Herstellung der in den Beispielen 1 und 2 genannten Produkte verwendet.

Die Verwendung des erfindungsgemäß erhaltenen Nahrungsfaserreichen Materials aus Kakao zur Herstellung Nahrungsfaserangereicherter Schokolade Bzw. Schokolade-haltiger Produkte wird im folgenden beispielhaft beschrieben:

### Beispiel 4

### Nahrungsfaser-reiche Milchschokolade

Eine Mischung aus 15 kg erfindungsgemäß hergestelltem trocknem Kakao-Nahrungsfaser-reichem Material mit 7,9 kg Kakao-Liquor, 25,3 kg Kakaobutter, 50,3 kg weißem Zucker, 25 kg Vollmilchpulver, 17,5 fettarmen Milchpulver und 0,15 kg Lecithin wird hergestellt. Diese Mischung wird unter Verwendung eines Scher-Mixers (shear-mixers) geknetet und dann in einem 5-Zylinder-Refiner bearbeitet.

Das resultierende feine Pulver wird in einen Suchard-Conchen übergeführt und dann wie herkömmliche Schokolade behandelt. Die vollständige Verflüssigung der Nahrungsfaser-reichen Milchschokolade wird durch das Hinzufügen von 8,9 kg Kakaobutter und 0,4 kg Lecithin während des Conchierens erreicht.

Die erhaltene flüssige Nahrungsfaser-reiche Milchschokolade wird in den Vorrichtungen für normale Schokolade temperiert und geformt.

Die als Endprodukt erhaltene Nahrungsfaser-reiche Milchschokolade ist in Geschmack und Beschaffenheit sehr ansprechend. Ihre Farbe ist wesentlich dunkler als die normale Milchschokolade, geschmacklich kommt sie dunkler Schokolade sehr nahe.

### Beispiel 5

### Nahrungsfaser-reicher Konfekt-Riegel

In einem Scher-Mixer werden 22,7 kg des erfindungsgemäß hergestellten Nahrungsfaser-reichen Kakaomaterials mit 0,22 kg Lecithin und 13,1 kg Milchfett gemischt. Dieses Gemisch wird in einem 3-Zylinder-Refiner behandelt.

Das erhaltene Pulver wird in einem Scher-Mixer mit 7,3 kg Kakaopulver (10 bis 12 Gew.-% Fett), 31,8 kg feinem Zucker, 25,1 kg an Fetten und Aromastoffen geknetet.

Unter die resultierende flüssige Masse mit einem hohen Gehalt an Kakaofasern werden 11 kg Reisflocken und 21,4 kg Kornflakes untergehoben. Die knusprige Nahrungsfaser-reiche Masse wird dann in kleine Riegel über 5,7 kg Waffeln geformt. Die Riegel werden zur Verfestigung der Masse gekühlt und dann teilweise mit 20,25 kg dunkler Überzugsschokolade umhüllt.

Das Endprodukt ist ein 20 g Riegel, der reich an natürlichen Kakao-Nahrungsfasern ist.

### Beispiel 6

### Ballaststoffreiches Instant-Kakao-Getränk

5 kg des Nahrungsfaser-reichen erfindungsgemäß erhaltenen Materials werden Brocken mit 10 kg lecithinhaltigem Kakaopulver (10 bis 12 Gew.-% Fett) und 35 kg feinem Zucker gemischt.

Das trockene Gemisch wird dann agglomeriert, indem das Pulver in einen Dampf-Fluß gesprüht wird - entsprechend den Standardbedingungen der Agglomeration.

Das Endprodukt ist ein Nahrungsfaser-reiches Instant-Kakao-Getränk, welches einen angenehmen Geschmack hat und sich von einem normalen Instant-Kakao-Getränk lediglich durch eine etwas dunklere Farbe unterscheidet.

## Patentansprüche

1. Verfahren zur Herstellung von diätischen Kakao-Nahrungsfasern aus Kakaopulver zur Verwendung als Ballaststoff in einem Schokolade-Produkt, **gekennzeichnet durch** folgende Maßnahmen:
a) als Ausgangsmaterial wird ein Kakaopulver mit geringem Fettgehalt, insbesondere mit einem Fettgehalt von maximal 20 %, verwendet,
b) es wird eine Suspension des Kakaopulvers in einem geeigneten Lösungsmittel hergestellt,
c) die Suspension des Kakaopulvers wird enzymatisch behandelt zum Abbau der darin enthaltenen Stärke; wobei ausgewählte enzymatische Reaktionsbedingungen bezüglich eines pH-Wertes, einer Temperatur und einer Reaktionszeit eingehalten werden, bei einer Reaktionszeit zwischen 30 Minuten und 5 Stunden,
d) die beim Abbau der Stärke anfallenden Stärke-Abbauprodukte werden separiert,
e) ein dabei entstehender fester Rückstand wird anschliessenden Wasch-, Separations- und Trocknungsschritten unterzogen, um ein Nahrungsfaser-reiches Kakaomaterial zu erhalten.

2. Verfahren nach Anspruch 1, dadurch gekennzeichnet, daß der enzymatische Abbau von Stärke mittels α-Amylase durchgeführt wird.

3. Verfahren nach Anspruch 1 und 2, dadurch gekennzeichnet, daß anfallende Stärke-Abbauprodukte in dem Lösungsmittel löslich sind.

4. Verfahren nach Anspruch 3, dadurch gekennzeichnet, daß die Suspension Kakaopulver zu 10 bis 30 Gew.-% enthält.

5. Verfahren nach Anspruch 3 oder 4, dadurch gekennzeichnet, daß das Lösungsmittel Wasser oder Ethanol oder ein Wasser-Ethanol-Gemisch ist.

6. Verfahren nach einem oder mehreren der Ansprüche 1 bis 5, dadurch gekennzeichnet, daß das Kakaopulver einen Fettgehalt von weniger als 10 % aufweist.

7. Verfahren nach einem oder mehreren der Ansprüche 1 bis 6, dadurch gekennzeichnet, daß die Suspension einen pH-Wert von 5,5 bis 8,0 ausweist.

8. Verfahren nach einem oder mehreren der Ansprüche 1 bis 7, dadurch gekennzeichnet, daß der enzymatische Stärke-abbau bei Temperaturen zwischen 20° C und 90° C durchgeführt wird.

9. Verfahren nach einem oder mehreren der Ansprüche 1 bis 8, dadurch gekennzeichnet, daß Wasch-Schritte unter Verwendung von Wasser und/oder Aceton durchgeführt werden.

10. Verfahren nach einem oder mehreren der Ansprüche 1 bis 9, dadurch gekennzeichnet, daß Separationsschritte mittels Druckfiltration oder Zentrifugation erfolgen.

11. Verwendung des Kakao-Nahrungsfaser-reichen Materials, welches nach einem Verfahren gemäß einem oder mehreren der Ansprüche 1 bis 10 gereinigt wurde, zur Herstellung von Schokolade, Konfekt oder Kakaogetränken.

12. Nahrungsfaser-reiches Schokolade-Produkt, gekennzeichnet durch eine Zusammensetzung aus Kakaopulver, Zucker und einem Kakaomaterial aus 35 % bis 75 % natürlichen Kakao-Nahrungsfasern.

## Claims

1. Process for the preparation of edible dietetic cocoa fibre from cocoa powder for use as roughage in a chocolate product, characterized by the following measures:
a) the starting material used is a cocoa powder with a low fat content, in particular a fat content of not more than 20%,
b) the cocoa powder is suspended in a suitable solvent,
c) the cocoa powder suspension is treated enzymatically to degrade the starch contained therein, selected enzymatic reaction conditions being maintained with regard to pH, temperature and reaction time and the reaction time being between 30 minutes and 5 hours,
d) the starch degradation products which are formed during degradation of the starch are separated off,
e) and a resulting solid residue is subsequently subjected to washing, separation and drying steps to obtain a cocoa material which is high in edible fibre.

2. Process according to Claim 1, characterized in that the enzymatic starch degradation is carried out by means of α-amylase.

3. Process according to Claim 1 and 2, characterized in that starch degradation products obtained are soluble in the solvent.

4. Process according to Claim 3, characterized in that the suspension contains 10 to 30% by weight of cocoa powder.

5. Process according to Claim 3 or 4, characterized in that the solvent is water or ethanol or a mixture of ethanol and water.

6. Process according to one or more of Claims 1 to 5, characterized in that the fat content of the cocoa powder is less than 10%.

7. Process according to one or more of Claims 1 to 6, characterized in that the suspension has a pH of 5.5 to 8.0.

8. Process according to one or more of Claims 1 to 7, characterized in that the enzymatic starch degradation is carried out at temperatures between 20°C and 90°C.

9. Process according to one or more of Claims 1 to 8, characterized in that washing steps are carried out using water and/or acetone.

10. Process according to one or more of Claims 1 to 9, characterized in that separation steps are carried out by means of pressure filtration or centrifugation.

11. Use of the material which is high in edible cocoa fibre and which has been purified by a process according to one or more of Claims 1 to 10, for the preparation of chocolate, confectionery or cocoa beverages.

12. Chocolate product which is high in edible fibre, characterized in that it is composed of cocoa powder, sugar and a cocoa material containing 35% to 75% of natural edible cocoa fibre.

## Revendications

1. Procédé de fabrication de fibres alimentaires de cacao diététiques, à partir de poudre de cacao, pour l'utilisation sous forme de substance de ballast dans un produit chocolaté, caractérisé par les dispositions suivantes :
a) on utilise ,comme matériau de départ, une poudre de cacao, à faible teneur en graisses, en particulier avec une teneur en graisses maximale de 20 %,
b) on prépare une suspension de la poudre de cacao, dans un solvant approprié,
c) on soumet la suspension de la poudre de cacao à un traitement enzymatique approprié, pour détruire l'amidon qui y est contenu; des conditions de réaction enzymatiques sélectionnées étant respectées, quant à la valeur de pH, la température et la durée de réaction, avec une durée de réaction comprise entre 30 minutes et 5 heures,
d) on sépare les produits de la décomposition de l'amidon apparus lors de cette opération de décomposition de l'amidon,
e) on soumet ensuite le dépôt solide apparu à des étapes de lavage, séparation et séchage, pour obtenir un matériau à base de cacao riche en fibres nutritives.

2. Procédé selon la revendication 1, caractérisé en ce que la décomposition enzymatique de l'amidon est effectuée à l'aide d'une amylase α.

3. Procédé selon les revendications 1 et 2, caractérisé en ce que les produits de décomposition de l'amidon apparus sont solubles dans le solvant.

4. Procédé selon la revendication 3, caractérisé en ce que la suspension contient jusqu'à 10 à 30 % en poids de poudre de cacao.

5. Procédé selon la revendication 3 ou 4, caractérisé en ce que le solvant est de l'eau, ou de l'éthanol, ou un mélange eau-éthanol.

6. Procédé selon l'une ou plusieurs des revendications 1 à 5, caractérisé en ce que la poudre de cacao présente une teneur en graisses inférieure à 10 %.

7. Procédé selon l'une ou plusieurs des revendications 1 à 6, caractérisé en ce que la suspension présence un pH compris dans la plage allant de 5,5 à 8,0.

8. Procédé selon l'une ou plusieurs des revendications 1 à 7, caractérisé en ce que la décomposition enzymatique de l'amidon est effectuée à des températures comprises dans la plage allant de 20°C à 90°C.

9. Procédé selon l'une ou plusieurs des revendications 1 à 8, caractérisé en ce que les étapes de lavage sont effectuées en utilisant de l'eau et/ou de l'acétone.

10. Procédé selon l'une ou plusieurs des revendications 1 à 9, caractérisé en ce que les étapes de séparation, s'effectuent au moyen d'une filtration sous pression ou une centrifugation.

11. Utilisation du matériau riche en fibres nutritives de cacao, ayant été purifié selon l'une ou plusieurs des revendications 1 à 10, pour la fabrication de chocolat, de confiserie ou de boissons au cacao.

12. Produit chocolaté riche en fibres nutritives, caractérisé par une composition à base de poudre de cacao, de sucre et d'un matériau à base de cacao, composé de 35 % à 75 % de fibres nutritives de cacao naturelles.
